# EUROPEAN PATENT APPLICATION

(11) **EP 3 694 260 A1**
(43) Date of publication of application: **12.08.2020**
(21) Application number: 17928175.3
(22) Date of filing: 11.10.2017
(51) Int. Cl.: H04W 48/18

(54) **AUXILIARY SERVING CELL MANAGEMENT METHOD, NETWORK DEVICE, AND TERMINAL DEVICE**

(71) Applicant: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN); ZHANG, Zhi, Dongguan Guangdong 523860 (CN)
(74) Representative: Manitz Finsterwald Patent- und Rechtsanwaltspartnerschaft mbB
(86) International application number: PCT/CN2017/105653
(87) International publication number: WO 2019/071460

(57) **Abstract**

Disclosed are an auxiliary serving cell management method, a network device, a terminal device, and a computer storage medium. The method comprises: receiving auxiliary information reported by a terminal device; and triggering adjustment of a cell and/or beam for the terminal device on the basis of the auxiliary information.

## Description

### TECHNICAL FIELD

Embodiments of the present disclosure generally relate to information process technologies, and more particularly, to an aided management method for a serving cell, a network device, a terminal device and a computer storage medium.

### BACKGROUND

Currently, with the pursuit of speed, low latency, high-speed mobility, energy efficiency, and the diversity and complexity of services in the future, the 3GPP International Standards Organization has started to develop 5G In order to support LTE-NR interworking in 5G band combinations between different RATs are needed to support LTE-NR DC to transmit data and improve system throughput. When a terminal works on two or more carriers in different frequency bands at the same time, the uplink signals of these carriers may interfere with the downlink received signals of some carriers.

### SUMMARY

In order to solve the above technical problems, embodiments of the present disclosure provide an aided management method for a serving cell, a network device, a terminal device and a computer storage medium.

An embodiment of the present disclosure provides an aided management method for a serving cell, applied to a network device and including:
receiving auxiliary information reported by a terminal device; and
based on the auxiliary information, triggering a cell and/or beam adjustment for the terminal device.

According to embodiments, triggering the cell and/or beam adjustment for the terminal device includes:
triggering a cell and/or beam change for the terminal device;
   or,
triggering a cell and/or beam addition for the terminal device.

According to embodiments, the method further includes:
acquiring a target cell for the cell and/or beam change for the terminal device based on the auxiliary information;
wherein the target cell for the cell and/or beam change is a cell that may become a cell in a secondary cell group, and the auxiliary information is information related to at least one cell.

According to embodiments, the information related to at least one cell includes at least one of the following:
a cell identifier;
uplink transmission power information;
whether there is internal interference with the serving cell; or
cell usage priority indication.

According to embodiments, the uplink transmission power information is a maximum uplink transmission power of the terminal device that satisfies a demodulation threshold.

An embodiment of the present disclosure provides an aided management method for a serving cell, applied to a terminal device and including:
based on a current serving cell, obtaining a target cell for the terminal for which auxiliary information is to be formed, obtaining information related to the target cell and forming the auxiliary information.

According to embodiments, the method further includes:
reporting the auxiliary information to a network side to trigger a cell and/or beam adjustment for the terminal device.

According to embodiments, related information corresponding to the target cell for which the auxiliary information is formed includes at least one of the following:
a cell identifier;
uplink transmission power information;
whether there is internal interference with the serving cell; or
cell usage priority indication.

According to embodiments, the uplink transmission power information is a maximum uplink transmission power of UE that satisfies a demodulation threshold.

An embodiment of the present disclosure provides a network device, including:
a first communication unit configured to receive auxiliary information reported by a terminal device; and
a first process unit configured to, based on the auxiliary information, trigger a cell and/or beam adjustment for the terminal device.

According to embodiments, the first process unit triggers a cell and/or beam change for the terminal device; or, triggers a cell and/or beam addition for the terminal device.

According to embodiments, the first process unit is further configured to acquire a target cell for the cell and/or beam change for the terminal device based on the auxiliary information;
wherein the target cell for the cell and/or beam change is a cell that may become a cell in a secondary cell group, and the auxiliary information is information related to at least one cell.

According to embodiments, the information related to at least one cell includes at least one of the following:
a cell identifier;
uplink transmission power information;
whether there is internal interference with the serving cell; or
cell usage priority indication.

According to embodiments, the uplink transmission power information is a maximum uplink transmission power of the terminal device that satisfies a demodulation threshold.

An embodiment of the present disclosure provides a terminal device, including:
a second process unit configured to, based on a current serving cell, obtain a target cell for the terminal for which auxiliary information is to be formed, obtain information related to the target cell and form the auxiliary information.

According to embodiments, the terminal device further includes:
a second communication unit configured to report the auxiliary information to a network side to trigger a cell and/or beam adjustment for the terminal device.

According to embodiments, related information corresponding to the target cell for which the auxiliary information is formed includes at least one of the following:
a cell identifier;
uplink transmission power information;
whether there is internal interference with the serving cell; or
cell usage priority indication.

According to embodiments, the uplink transmission power information is a maximum uplink transmission power of the terminal device that satisfies a demodulation threshold.

An embodiment of the present disclosure provides a network device, including:
a processor; and
a memory for storing computer programs capable of running on the processor,
wherein when the processor executes the computer program, steps of any one of the methods are implemented.

An embodiment of the present disclosure provides a terminal device, including:
a processor; and
a memory for storing computer programs capable of running on the processor,
wherein when the processor executes the computer program, steps of any one of the methods are implemented.

An embodiment of the present disclosure provides a computer storage medium, wherein the computer storage medium stores computer-executable instructions, and when the computer-executable instructions are executed, steps of any one of the methods are implemented.

In the technical solutions of the embodiments of the present disclosure, the auxiliary information can be reported to the network side by the terminal device, and the auxiliary information enables the network side to configure a reasonable serving cell or beam for the terminal device. The auxiliary information can be used as a trigger of the terminal device and based on the trigger signal, a cell and/or a beam can be selected. Thus, embodiments of the present disclosure can achieve the purpose of reducing or avoiding interference for the terminal device, thereby improving the reliability of data transmission and the throughput of the terminal device.

### BRIEF DESCRIPTION OF THE DRAWINGS

FIG. 1 is a schematic flowchart 1 of an aided management method for a serving cell according to an embodiment of the present disclosure.
FIG. 2 is a schematic flowchart 2 of an aided management method for a serving cell according to an embodiment of the present disclosure.
FIG. 3 is a schematic structural diagram of a network device according to an embodiment of the present disclosure.
FIG. 4 is a schematic structural diagram of a terminal device according to an embodiment of the present disclosure.
FIG. 5 is a schematic diagram of a hardware architecture according to an embodiment of the present disclosure.

### DETAILED DESCRIPTION

In order to understand the features and technical contents of the embodiments of the present disclosure in more detail, embodiments of the present disclosure will be described in detail with reference to the accompanying drawings. The drawings are provided for illustration only and are not intended to limit the embodiments of the present disclosure.

### First Embodiment

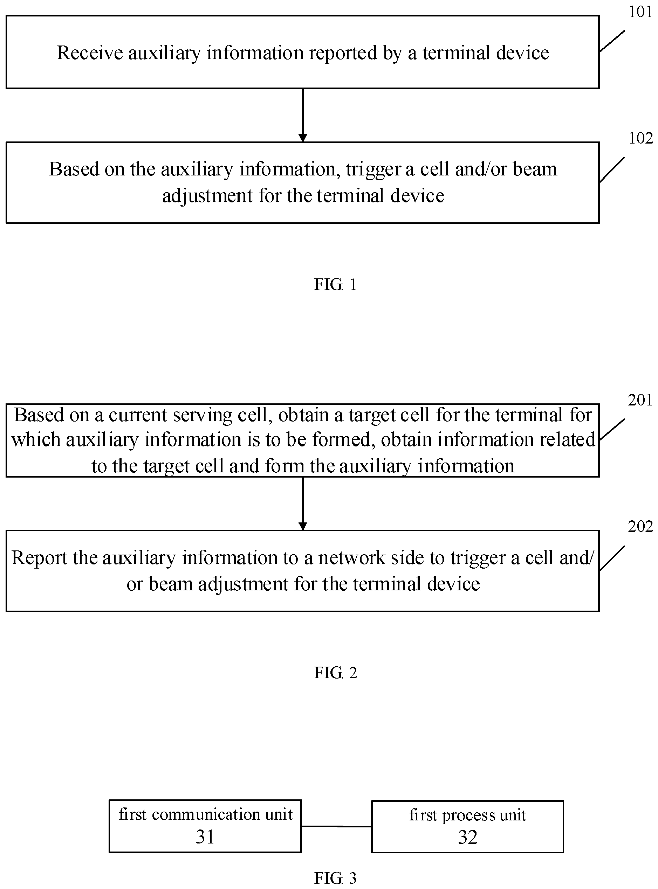

An embodiment of the present disclosure provides an aided management method for a serving cell, which is applied to a network equipment. As shown in FIG. 1, the method includes:

In step 101, auxiliary information reported by a terminal device is received.

In step 102, based on the auxiliary information, a cell and/or beam adjustment for the terminal device is triggered.

This embodiment can be applied in an EN-DC (LTE NR dual connectivity) scenario. Some cells/beams require a relative large UE uplink transmission power, and some cells/beams require a relatively small UE uplink transmission power. According to the downlink signal reception situation, the UE can estimate a cell or a beam which requires a small uplink transmission power, and report to the network. For the report of the auxiliary information from the UE, the network side can trigger SCG cell/beam change or SCG cell/beam addition based on the UE request.

Regarding the method for estimating uplink transmission power, reciprocity can be used, that is, the uplink transmission power is determined based on the downlink reception power. Of course, other methods can also be used, embodiments of the present disclosure do not list all methods here.

The method further includes: acquiring a target cell for the cell and/or beam change for the terminal device based on the auxiliary information; wherein the target cell for the cell and/or beam change is a cell that may become a cell in a secondary cell group, and the auxiliary information is information related to at least one cell. The at least one cell may be information related to a series of cells.

The information related to at least one cell includes at least one of the following:
a cell identifier;
uplink transmission power information which is a maximum uplink transmission power of the terminal device that satisfies a demodulation threshold;
whether there is internal interference with the serving cell; or
cell usage priority indication.

Based on the above descriptions, the following specific deployment are given for different scenarios.

### (I) NR intra-frequency and inter-frequency deployment scenarios

For all neighboring cells that may become SCG cells, the terminal device estimates whether there is interference in the cells and/or beams that require small uplink transmission power.

Then, based on whether there is interference in the cells and/or beams, a corresponding cell usage priority indication is set, and the usage priority indication is reported to the network side.

In this way, the network side can determine which NR cell in the SCG to use based on the related information of a series of cells reported by the terminal device.

### (II) NR inter-frequency deployment scenario

If there is self-interference between the current NR cell and the LTE cell, the UE can report all NR inter-frequency cells that may become SCG cells.

Further, on the basis of the foregoing method, the network side may also perform cell adjustment processing based on the auxiliary information. Specifically, triggering the cell and/or beam adjustment for the terminal device includes:
triggering a cell and/or beam change for the terminal device;
or, triggering a cell and/or beam addition for the terminal device.

That is, according to the auxiliary information reported by the UE, when the SN is subsequently added or changed, the auxiliary information reported by the UE may be considered to determine the NR cell in the SCG

For example, the priority of the cell or beam reported by the UE (that is, the terminal device) may be considered. If the priority is high, the cell or beam may be preferentially selected as the NR cell in the SCG Of course, other selection methods can also be adopted. For example, the priority can be combined with the internal interference situation, that is, if a cell has small internal interference and high priority, the cell can be preferentially selected. The embodiment does not list all methods here.

### Second Embodiment

An embodiment of the present disclosure provides an aided management method for a serving cell, which is applied to a terminal device. The method includes: based on a current serving cell, obtaining a target cell for the terminal for which auxiliary information is to be formed, obtaining information related to the target cell and forming the auxiliary information.

For example, as shown in FIG. 2, the method includes:

In step 201, based on a current serving cell, a target cell for the terminal for which auxiliary information is to be formed is obtained, information related to the target cell is obtained and the auxiliary information is formed.

In step 202, the auxiliary information is reported to a network side to trigger a cell and/or beam adjustment for the terminal device.

This embodiment can be applied in an EN-DC (LTE NR dual connectivity) scenario. Some cells/beams require a relative large UE uplink transmission power, and some cells/beams require a relatively small UE uplink transmission power. According to the downlink signal reception situation, the UE can estimate a cell or a beam which requires a small uplink transmission power, and report to the network. For the report of the auxiliary information from the UE, the network side can trigger SCG cell/beam change or SCG cell/beam addition based on the UE request.

Regarding the method for estimating uplink transmission power, reciprocity can be used, that is, the uplink transmission power is determined based on the downlink reception power. Of course, other methods can also be used, embodiments of the present disclosure do not list all methods here.

The method further includes: acquiring a target cell for the cell and/or beam change for the terminal device based on the auxiliary information; wherein the target cell for the cell and/or beam change is a cell that may become a cell in a secondary cell group, and the auxiliary information is information related to at least one cell. The at least one cell may be information related to a series of cells.

The information related to at least one cell includes at least one of the following:
a cell identifier;
uplink transmission power information which is a maximum uplink transmission power of the terminal device that satisfies a demodulation threshold;
whether there is internal interference with the serving cell; or
cell usage priority indication.

Based on the above descriptions, the following specific deployment are given for different scenarios.

### (I) NR intra-frequency and inter-frequency deployment scenarios

For all neighboring cells that may become SCG cells, the terminal device estimates whether there is interference in the cells and/or beams that require small uplink transmission power.

Then, based on whether there is interference in the cells and/or beams, a corresponding cell usage priority indication is set, and the usage priority indication is reported to the network side.

In this way, the network side can determine which NR cell in the SCG to use based on the related information of a series of cells reported by the terminal device.

### (II) NR inter-frequency deployment scenario

If there is self-interference between the current NR cell and the LTE cell, the UE can report all NR inter-frequency cells that may become SCG cells.

Further, on the basis of the foregoing method, the network side may also perform cell adjustment processing based on the auxiliary information. Specifically, triggering the cell and/or beam adjustment for the terminal device includes:
triggering a cell and/or beam change for the terminal device;
or, triggering a cell and/or beam addition for the terminal device.

That is, according to the auxiliary information reported by the UE, when the SN is subsequently added or changed, the auxiliary information reported by the UE may be considered to determine the NR cell in the SCG

For example, the priority of the cell or beam reported by the UE (that is, the terminal device) may be considered. If the priority is high, the cell or beam may be preferentially selected as the NR cell in the SCG Of course, other selection methods can also be adopted. For example, the priority can be combined with the internal interference situation, that is, if a cell has small internal interference and high priority, the cell can be preferentially selected. The embodiment does not list all methods here.

### Third Embodiment

An embodiment of the present disclosure provides a network device. As shown in FIG. 3, the network device includes a first communication unit 31 and a first process unit 32.

The first communication unit 31 is configured to receive auxiliary information reported by a terminal device.

The first process unit 32 is configured to, based on the auxiliary information, trigger a cell and/or beam adjustment for the terminal device.

This embodiment can be applied in an EN-DC (LTE NR dual connectivity) scenario. Some cells/beams require a relative large UE uplink transmission power, and some cells/beams require a relatively small UE uplink transmission power. According to the downlink signal reception situation, the UE can estimate a cell or a beam which requires a small uplink transmission power, and report to the network. For the report of the auxiliary information from the UE, the network side can trigger SCG cell/beam change or SCG cell/beam addition based on the UE request.

Regarding the method for estimating uplink transmission power, reciprocity can be used, that is, the uplink transmission power is determined based on the downlink reception power. Of course, other methods can also be used, embodiments of the present disclosure do not list all methods here.

The first process unit 32 is configured to acquire a target cell for the cell and/or beam change for the terminal device based on the auxiliary information. The target cell for the cell and/or beam change is a cell that may become a cell in a secondary cell group, and the auxiliary information is information related to at least one cell. The at least one cell may be information related to a series of cells.

The information related to at least one cell includes at least one of the following:
a cell identifier;
uplink transmission power information which is a maximum uplink transmission power of the terminal device that satisfies a demodulation threshold;
whether there is internal interference with the serving cell; or
cell usage priority indication.

Based on the above descriptions, the following specific deployment are given for different scenarios.

### (I) NR intra-frequency and inter-frequency deployment scenarios

For all neighboring cells that may become SCG cells, the terminal device estimates whether there is interference in the cells and/or beams that require small uplink transmission power.

Then, based on whether there is interference in the cells and/or beams, a corresponding cell usage priority indication is set, and the usage priority indication is reported to the network side.

In this way, the network side can determine which NR cell in the SCG to use based on the related information of a series of cells reported by the terminal device.

### (II) NR inter-frequency deployment scenario

If there is self-interference between the current NR cell and the LTE cell, the UE can report all NR inter-frequency cells that may become SCG cells.

Further, on the basis of the foregoing method, the network side may also perform cell adjustment processing based on the auxiliary information. Specifically, triggering the cell and/or beam adjustment for the terminal device includes:
triggering a cell and/or beam change for the terminal device;
or, triggering a cell and/or beam addition for the terminal device.

That is, according to the auxiliary information reported by the UE, when the SN is subsequently added or changed, the auxiliary information reported by the UE may be considered to determine the NR cell in the SCG

For example, the priority of the cell or beam reported by the UE (that is, the terminal device) may be considered. If the priority is high, the cell or beam may be preferentially selected as the NR cell in the SCG Of course, other selection methods can also be adopted. For example, the priority can be combined with the internal interference situation, that is, if a cell has small internal interference and high priority, the cell can be preferentially selected. The embodiment does not list all methods here.

### Fourth Embodiment

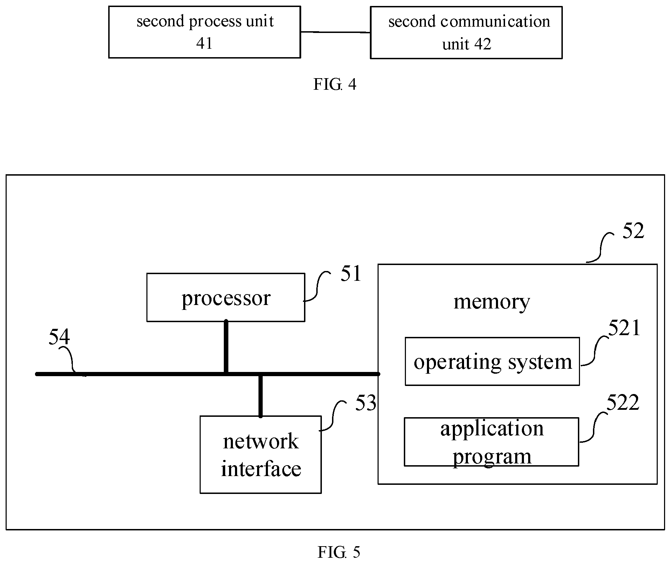

An embodiment of the present disclosure provides a terminal device. As shown in FIG. 4, the terminal device includes a second process unit 41.

The second process unit 41 is configured to, based on a current serving cell, obtain a target cell for the terminal for which auxiliary information is to be formed, obtain information related to the target cell and form the auxiliary information.

The terminal device further includes a second communication unit 42.

The second communication unit 42 is configured to report the auxiliary information to a network side to trigger a cell and/or beam adjustment for the terminal device.

This embodiment can be applied in an EN-DC (LTE NR dual connectivity) scenario. Some cells/beams require a relative large UE uplink transmission power, and some cells/beams require a relatively small UE uplink transmission power. According to the downlink signal reception situation, the UE can estimate a cell or a beam which requires a small uplink transmission power, and report to the network. For the report of the auxiliary information from the UE, the network side can trigger SCG cell/beam change or SCG cell/beam addition based on the UE request.

Regarding the method for estimating uplink transmission power, reciprocity can be used, that is, the uplink transmission power is determined based on the downlink reception power. Of course, other methods can also be used, embodiments of the present disclosure do not list all methods here.

The method further includes: acquiring a target cell for the cell and/or beam change for the terminal device based on the auxiliary information; wherein the target cell for the cell and/or beam change is a cell that may become a cell in a secondary cell group, and the auxiliary information is information related to at least one cell. The at least one cell may be information related to a series of cells.

The information related to at least one cell includes at least one of the following:
a cell identifier;
uplink transmission power information which is a maximum uplink transmission power of the terminal device that satisfies a demodulation threshold;
whether there is internal interference with the serving cell; or
cell usage priority indication.

Based on the above descriptions, the following specific deployment are given for different scenarios.

### (I) NR intra-frequency and inter-frequency deployment scenarios

For all neighboring cells that may become SCG cells, the terminal device estimates whether there is interference in the cells and/or beams that require small uplink transmission power.

Then, based on whether there is interference in the cells and/or beams, a corresponding cell usage priority indication is set, and the usage priority indication is reported to the network side.

In this way, the network side can determine which NR cell in the SCG to use based on the related information of a series of cells reported by the terminal device.

### (II) NR inter-frequency deployment scenario

If there is self-interference between the current NR cell and the LTE cell, the UE can report all NR inter-frequency cells that may become SCG cells.

Further, on the basis of the foregoing method, the network side may also perform cell adjustment processing based on the auxiliary information. Specifically, triggering the cell and/or beam adjustment for the terminal device includes:
triggering a cell and/or beam change for the terminal device;
or, triggering a cell and/or beam addition for the terminal device.

That is, according to the auxiliary information reported by the UE, when the SN is subsequently added or changed, the auxiliary information reported by the UE may be considered to determine the NR cell in the SCG

For example, the priority of the cell or beam reported by the UE (that is, the terminal device) may be considered. If the priority is high, the cell or beam may be preferentially selected as the NR cell in the SCG Of course, other selection methods can also be adopted. For example, the priority can be combined with the internal interference situation, that is, if a cell has small internal interference and high priority, the cell can be preferentially selected. The embodiment does not list all methods here.

An embodiment of the present disclosure also provides a hardware architecture of a terminal device. As shown in FIG. 5, the terminal device includes at least one processor 51, a memory 52, and at least one network interface 53. Various components are coupled together via a bus system 54. It can be understood that the bus system 54 is used to implement connection and communication between these components. The bus system 54 includes a power bus, a control bus, and a status signal bus in addition to a data bus. However, for the sake of clarity, various buses are marked as the bus system 54 in FIG. 5.

It can be understood that the memory 52 in the embodiment of the present disclosure may be a volatile memory or a non-volatile memory, or may include both volatile and non-volatile memory.

In some implementations, the memory 52 stores the following elements, executable modules or data structures, or their subsets, or their extended sets:
operating system 521 and application 522.

The processor 51 is configured to execute all the method steps described in the First embodiment or the Second embodiment, and details are not described herein again.

An embodiment of the present disclosure provides a computer storage medium. The computer storage medium stores computer-executable instructions, and when the computer-executable instructions are executed, the method steps of the foregoing First Embodiment or Second Embodiment are implemented.

In the embodiments of the present disclosure, if the foregoing devices are implemented in the form of software functional modules and sold or used as an independent product, they may also be stored in a computer-readable storage medium. Based on such an understanding, the essence of the technical solutions of the embodiments of the present disclosure or the part of the technical solutions of the embodiments of the present disclosure that contributes to the existing technologies can be embodied in the form of a software product. The computer software product is stored in a storage medium and includes instructions to enable a computer device (which may be a personal computer, a server, or a network device) to execute all or part of the methods described in the embodiments of the present disclosure. The foregoing storage medium includes various media that can store program codes, such as a U disk, a mobile hard disk, a read only memory (ROM), a magnetic disk, or an optical disk. The embodiments of the present disclosure are not limited to any specific combination of hardware and software.

Accordingly, an embodiment of the present disclosure further provides a computer storage medium in which computer programs are stored. The computer programs are configured to execute the data scheduling method according to the embodiments of the present disclosure.

Although the exemplary embodiments of the present disclosure have been disclosed for illustrative purposes, those skilled in the art will recognize that various improvements, additions, and substitutions are also possible, and therefore, the scope of the present disclosure should not be limited to the above embodiments.

## Claims

1. An aided management method for a serving cell, applied to a network device and comprising:
receiving auxiliary information reported by a terminal device; and
based on the auxiliary information, triggering a cell and/or beam adjustment for the terminal device.

2. The method according to claim 1, wherein triggering the cell and/or beam adjustment for the terminal device comprises:
triggering a cell and/or beam change for the terminal device;
or,
triggering a cell and/or beam addition for the terminal device.

3. The method according to claim 1, further comprising:
acquiring a target cell for the cell and/or beam change for the terminal device based on the auxiliary information;
wherein the target cell for the cell and/or beam change is a cell that may become a cell in a secondary cell group, and the auxiliary information is information related to at least one cell.

4. The method according to claim 3, wherein the information related to at least one cell comprises at least one of the following:
a cell identifier;
uplink transmission power information;
whether there is internal interference with the serving cell; or
cell usage priority indication.

5. The method according to claim 4, wherein the uplink transmission power information is a maximum uplink transmission power of the terminal device that satisfies a demodulation threshold.

6. An aided management method for a serving cell, applied to a terminal device and comprising:
based on a current serving cell, obtaining a target cell for the terminal for which auxiliary information is to be formed, obtaining information related to the target cell and forming the auxiliary information.

7. The method according to claim 6, further comprising:
reporting the auxiliary information to a network side to trigger a cell and/or beam adjustment for the terminal device.

8. The method according to claim 6, wherein related information corresponding to the target cell for which the auxiliary information is formed comprises at least one of the following:
a cell identifier;
uplink transmission power information;
whether there is internal interference with the serving cell; or
cell usage priority indication.

9. The method according to claim 8, wherein the uplink transmission power information is a maximum uplink transmission power of UE that satisfies a demodulation threshold.

10. A network device, comprising:
a first communication unit configured to receive auxiliary information reported by a terminal device; and
a first process unit configured to, based on the auxiliary information, trigger a cell and/or beam adjustment for the terminal device.

11. The network device according to claim 10, wherein the first process unit triggers a cell and/or beam change for the terminal device; or, triggers a cell and/or beam addition for the terminal device.

12. The network device according to claim 10, wherein the first process unit is further configured to acquire a target cell for the cell and/or beam change for the terminal device based on the auxiliary information;
wherein the target cell for the cell and/or beam change is a cell that may become a cell in a secondary cell group, and the auxiliary information is information related to at least one cell.

13. The network device according to claim 12, wherein the information related to at least one cell comprises at least one of the following:
a cell identifier;
uplink transmission power information;
whether there is internal interference with the serving cell; or
cell usage priority indication.

14. The network device according to claim 13, wherein the uplink transmission power information is a maximum uplink transmission power of the terminal device that satisfies a demodulation threshold.

15. A terminal device, comprising:
a second process unit configured to, based on a current serving cell, obtain a target cell for the terminal for which auxiliary information is to be formed, obtain information related to the target cell and form the auxiliary information.

16. The terminal device according to claim 15, further comprising:
a second communication unit configured to report the auxiliary information to a network side to trigger a cell and/or beam adjustment for the terminal device.

17. The terminal device according to claim 15, wherein related information corresponding to the target cell for which the auxiliary information is formed comprises at least one of the following:
a cell identifier;
uplink transmission power information;
whether there is internal interference with the serving cell; or
cell usage priority indication.

18. The terminal device according to claim 17, wherein the uplink transmission power information is a maximum uplink transmission power of the terminal device that satisfies a demodulation threshold.

19. A network device, comprising:
a processor; and
a memory for storing computer programs capable of running on the processor,
wherein when the processor executes the computer program, steps of the method according to any one of claims 1-5 are implemented.

20. A terminal device, comprising:
a processor; and
a memory for storing computer programs capable of running on the processor,
wherein when the processor executes the computer program, steps of the method according to any one of claims 6-9 are implemented.

21. A computer storage medium, wherein the computer storage medium stores computer-executable instructions, and when the computer-executable instructions are executed, steps of the method according to any one of claims 1-9 are implemented.
